# EUROPEAN PATENT APPLICATION

(11) **EP 3 624 561 A1**
(43) Date of publication of application: **18.03.2020**
(21) Application number: 18194765.6
(22) Date of filing: 17.09.2018
(51) Int. Cl.: H05B 37/02

(54) **METHOD AND ARRANGEMENT FOR DYNAMIC GROUPING OF DEVICES IN A LIGHTING SYSTEM**

(71) Applicant: Helvar Oy Ab, 02150 Espoo (FI)
(72) Inventor: Wu, Dongmin, 02150 Espoo (FI); Nouri, Javad, 02150 Espoo (FI); Juslén, Henri, 02150 Espoo (FI); Sepponen, Laura, 02150 Espoo (FI)
(74) Representative: Papula Oy

(57) **Abstract**

A method and devices are provided for controlling the operation of a plurality of devices of a lighting system. First follower relationships are assigned to said plurality of devices; a follower relationship is a software instruction for one device of said lighting system to react upon a message transmitted by another device of said lighting system. A plurality of sensor findings are collected from said devices of said lighting system over a period of time. A sensor finding is a piece of information indicative of a user having been detected by a particular sensor at a particular moment of time. Second follower relationships are determined for said plurality of devices on the basis of said plurality of sensor findings. At least some of said second follower relationships are time-dependent. Said second follower relationships are then assigned to said plurality of devices.

## Description

### FIELD OF THE INVENTION

The invention concerns the technical field of controlling luminaires of a lighting system in groups. In particular the invention concerns the task of maintaining a most optimal grouping of luminaires in the lighting system.

### BACKGROUND OF THE INVENTION

In a large installation, luminaires are typically assigned into groups, where each group is then jointly controlled. For example, one switch in a control panel would be assigned to one group, and a user could select which groups of luminaires he wants to turn on or off by using the appropriate switch. Groups can be controlled by presence or motion sensors, especially such that one area sensor controls all luminaires in the area - in other words all luminaires assigned to its group - to turn on when it senses motion.

Alternatively, each luminaire may comprise a presence or motion sensor, and when one sensor of a group of luminaires detects motion, all luminaires in the group turn on, even those whose sensor did not detect motion.

Assigning luminaires into groups is a large part of lighting control system commissioning process, and there have been several ideas on how to automatize that. One approach is so-called light-casting, where each luminaire comprises a light sensor. The principle of light-casting is that the luminaires are turned on one-by-one, and those luminaires that can detect each other's light are assumed to be located near each other and are assigned into same group. This is described, for example, in EP 2 935 987 B1. This can be supplemented by using also sound signals, as disclosed in WO 2014/118676. Another variation is disclosed in US 9,992,838 B1, where detected light patterns are compared with pre-defined patterns and luminaires are assigned into groups according to changes in lighting level.

Information from presence sensors can also be used. For example, EP 2 944 161 B1 discloses a method wherein an input indicating a start of group definition mode is followed by a person walking around in the area where the luminaires he wants to assign into one group are located. The luminaires are equipped with a motion sensor, and all those luminaires whose motion sensor observes motion are assigned into the same group. This makes grouping luminaires in a room or a corridor relatively easy.

Another variation is equipping the luminaires with a sensor, which can be sensitive to movement, orientation with respect to geomagnetic poles, acceleration, air pressure or signal strength of a wireless communication signal, as disclosed in WO 2018/087650 A1. Luminaires with similar sensor values are then assigned into same group.

A further example of automatically defining groups is presented in WO 2017/162550 A1. A positioning system provides information on location of people or movable objects, and based on the information, a region is determined. A group is then formed of those luminaires that illuminate that region.

In WO 2014/145506 A2 the light-casting technique is further improved by using occupancy data. First, visual groups are defined by light-casting, in other words, luminaires/sensors in the same group can observe each other's light. On top of that, occupancy groups are defined of those that see similar or associated occupancy patterns. Occupancy grouping occurs gradually as more and more occupancy data is collected, sometimes changing and refining the grouping scheme. Visual groups provide a preliminary grouping scheme which is then refined with occupancy data as it is collected and processed.

It has been observed, however, that known ways of grouping the devices of a lighting system do not provide satisfactory results in all cases. New and more intelligent ways of grouping are therefore needed.

### SUMMARY

An objective of the present invention is to present a method, an apparatus and a computer program product for controlling the operation of a plurality of devices of a lighting system so that grouping can be made intelligently and adaptively. Another objective of the invention is that the method, apparatus and computer program product are applicable in a wide variety of different kinds of lighting systems. A further objective of the invention is that the method, apparatus, and computer program product allow the number and location of devices in the lighting system to be changed over time without having to dedicate too much human labor to reconfiguring the devices of the lighting system.

The objectives of the invention are achieved by allowing a control entity to collect sensor findings that include a reference to time, and to dynamically group the devices of the lighting system so that the follower relationships that define the grouping depend on time.

According to a first aspect there is provided a method for controlling the operation of a plurality of devices of a lighting system. The method comprises assigning first follower relationships to said plurality of devices, wherein a follower relationship is a software instruction for one device of said lighting system to react upon a message transmitted by another device of said lighting system. The method comprises collecting a plurality of sensor findings from said devices of said lighting system over a period of time, wherein a sensor finding is a piece of information indicative of a user having been detected by a particular sensor at a particular moment of time. The method comprises determining second follower relationships for said plurality of devices on the basis of said plurality of sensor findings, wherein at least some of said second follower relationships are time-dependent. The method comprises assigning said second follower relationships to said plurality of devices.

According to an embodiment a time scale of said time-dependent second follower relationships is defined in fractions of a day, so that a time-dependent second follower relationship is a software instruction for one device of said lighting system to react upon a message transmitted by another device of said lighting system in a different way depending on what time of the day it is.

According to an embodiment at least one of said second follower relationships is a software instruction for a particular luminaire of said lighting system to light up upon receiving a message transmitted by a particular movement detector indicating that said movement detector detected movement if said message came in a first time interval, but not to light up upon receiving such a message from said movement detector if said message came in a second, different time interval.

According to an embodiment at least one of said second follower relationships is a software instruction for a particular luminaire of said lighting system to light up to an illumination level upon receiving a message transmitted by a particular movement detector indicating that said movement detector detected movement, said illumination level depending on the time when said message came.

According to an embodiment at least one of said second follower relationships is a software instruction for a particular luminaire of said lighting system to dim down after a delay after receiving a message transmitted by a particular movement detector indicating that said movement detector detected movement, the length of said delay depending on the time when said message came.

According to an embodiment at least some of said second follower relationships group a number of luminaires of said lighting system into a follower group of a particular movement detector, so that for each luminaire of said follower group a corresponding second follower relationship is a software instruction to react upon a message indicating that said particular movement detector detected movement.

According to an embodiment said steps of collecting sensor findings, determining second follower relationships, and assigning the determined second follower relationships to said plurality of devices are repeated to assign updated second follower relationships to said plurality of devices, each time based at least partly upon the most recently collected sensor findings.

According to an embodiment the method comprising identifying, from said collected sensor findings, at least one sensor of said lighting system that in view of said collected sensor findings appears to detect little movement relative to other sensors of said lighting system during a regularly occurring part of the time, and instructing the identified sensor to go into a power saving mode for future occurrences of such regularly occurring parts of the time.

According to an embodiment the step of determining second follower relationships for said plurality of devices on the basis of said plurality of sensor findings is performed through unsupervised machine learning.

According to a second aspect there is provided a control apparatus for controlling the operation of a plurality of devices of a lighting system. The control apparatus comprises a sensor findings collecting subsystem configured to collect a plurality of sensor findings from said devices of said lighting system over a period of time, wherein a sensor finding is a piece of information indicative of a user having been detected by a particular sensor at a particular moment of time. The control apparatus comprises a processing system configured to determine follower relationships for said plurality of devices on the basis of said plurality of sensor findings, wherein a follower relationship is a software instruction for one device of said lighting system to react upon a message transmitted by another device of said lighting system, and wherein at least some of said follower relationships are time-dependent. The control apparatus comprises an instructions composing subsystem configured to formulate said follower relationships into instruction messages for said devices of said lighting system. The control apparatus comprises a communications subsystem configured to convey received sensor finding messages as sensor findings into said sensor findings collecting subsystem and configured to transmit said instruction messages towards said devices of said lighting system.

According to an embodiment, the control apparatus comprises a rules database for storing a plurality of rules of how received sensor findings are to affect the determining of follower relationships, and a programming interface for providing external access to said plurality of rules stored in said rules database.

According to a third aspect there is provided a computer program product for execution by a control apparatus controlling the operation of a plurality of devices of a lighting system. The computer program product comprises one or more sets of one or more machine-readable instructions configured to make, when executed on one or more processors of the control apparatus, the control apparatus perform the steps of collecting a plurality of sensor findings from said devices of said lighting system over a period of time, wherein a sensor finding is a piece of information indicative of a user having been detected by a particular sensor at a particular moment of time; determining follower relationships for said plurality of devices on the basis of said plurality of sensor findings, wherein a follower relationship is a software instruction for one device of said lighting system to react upon a message transmitted by another device of said lighting system, and wherein at least some of said follower relationships are time-dependent; formulating said follower relationships into instruction messages for said devices of said lighting system; and transmitting said instruction messages towards said devices of said lighting system.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a first example of grouping in a lighting system,
**Figure 2** illustrates a second example of grouping in a lighting system,
**Figure 3** illustrates a third example of grouping in a lighting system,
**Figure 4** illustrates a fourth example of grouping in a lighting system,
**Figure 5** illustrates a fifth example of grouping in a lighting system,
**Figure 6** illustrates a sixth example of grouping in a lighting system,
**Figure 7** illustrates an example of a lighting system and a control apparatus,
**Figure 8** illustrates another example of a lighting system and a control apparatus, and
**Figure 9** illustrates an example of a control apparatus and a computer program product.

### DETAILED DESCRIPTION

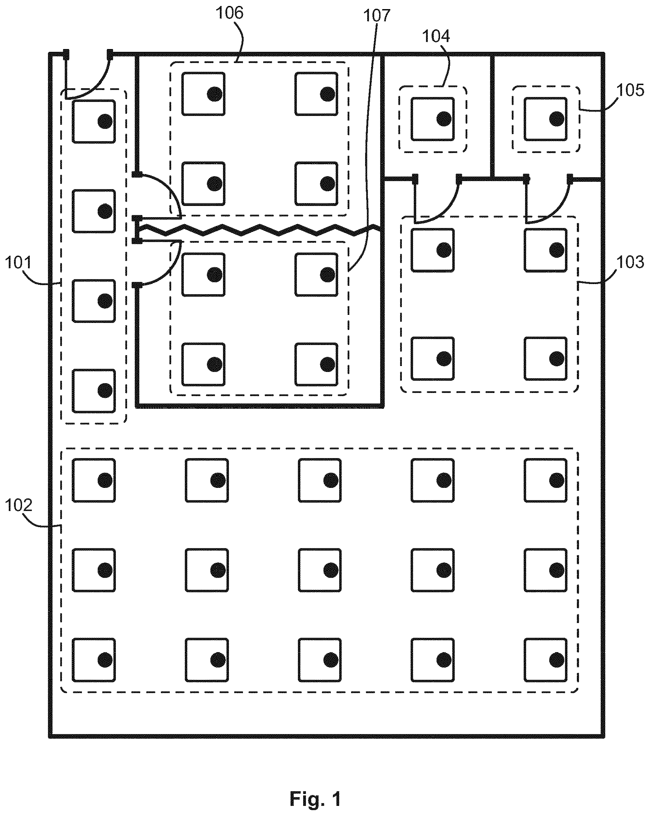

Fig. 1 illustrates an example of a lighting system that is used to illuminate various parts of an office space. There are a total of 33 luminaires in the lighting system, each marked with a square in fig. 1. The black dot in each square marks a sensor; here it is assumed that each luminaire comprises a sensor of its own. The type of sensor that is used is not essential for the purposes of the present invention. For the sake of example it may be assumed that the sensors are movement sensors based on passively detecting changes in infrared radiation.

The grouping of the luminaires, or in general the grouping of a plurality of devices of the lighting system, is implemented through the use of so-called follower relationships. A follower relationship is a software instruction for one device (follower device) of the lighting system to react upon a message transmitted by another device (followed device) of the lighting system. Typically, but not necessarily, the followed device is a sensor and the message transmitted is an announcement that the sensor detected movement.

As an example, in fig. 1 it is assumed that the four luminaires in the entrance hall belong to a first group 101. This means that for each of them there have been assigned four follower relationships, one of which is a software instruction to react upon messages transmitted by the luminaire's own sensor. The three other follower relationships are software instructions to react upon messages transmitted by the three other sensors in the first group 101. In a simple embodiment the software instructions are instructions to light up upon receiving a message transmitted by any of the sensors, indicating that such sensor detected movement. In other words, if movement is detected anywhere within the entrance hall, all luminaires in the first group 101 light up. Such an instruction may interpreted to also tell the luminaire to maintain its light-up state if it was already on when it received the message.

Other examples of groups in fig. 1 are a second group 102 that covers the open-plan-type office space; a third group 103 that covers the coffee room; a fourth group 104 that covers the toilet; a fifth group 105 that covers a storage room; a sixth group 106 that covers a first meeting room; and a seventh group 107 that covers a second meeting room. The number of devices in a group may vary: in this example there are two groups 104 and 105 that have only one luminaire (and one sensor) each, while the largest group 102 has a total of 15 luminaires (and sensors).

The way in which the grouping has been actually accomplished to arrive at the situation illustrated in fig. 1, i.e. the way in which the first follower relationships have been assigned to the devices, is of minor importance. As an example, one or more of the prior art methods may have been applied that were described above in the description of prior art. It is also possible that at this stage the "grouping" means that every luminaire constitutes a single-luminaire-group of its own and consequently reacts only upon sensor findings produced by its own sensor.

When the lighting system is operative and the illuminated space is in use, a plurality of sensor findings are collected from the devices of the lighting system over a period of time. A sensor finding is a piece of information that indicates a user having been detected by a particular sensor at a particular moment of time.

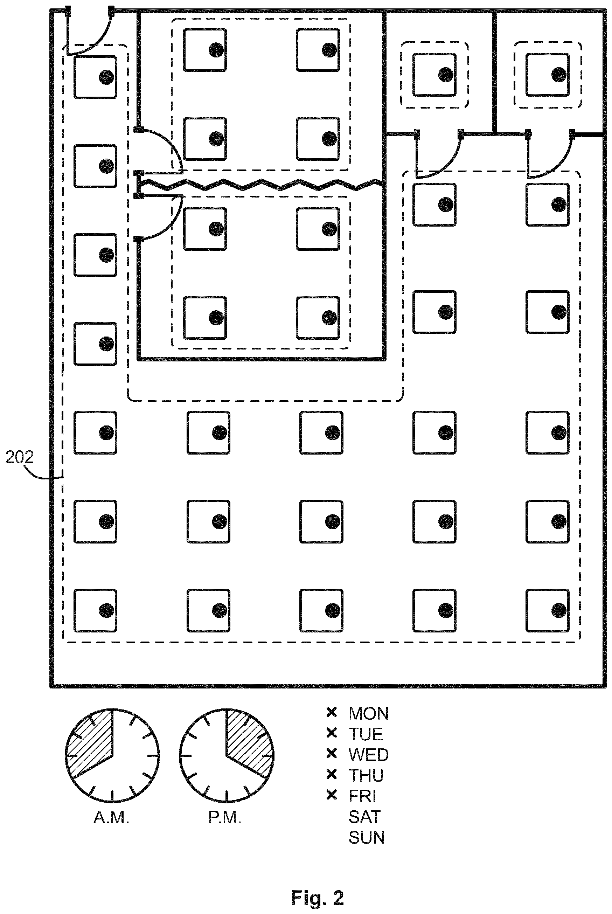

As an example, we may assume that at least some of the sensors in all groups 101, 102, and 103 detect very frequent movement and/or presence of users throughout the working hours each day from Monday to Friday. A logical explanation would be that employees come and go through the entrance hall, work at their desks in the open-plan office space, and frequently visit the coffee room to have a cup of coffee, to go to the toilet, and/or to chat with their colleagues. Thus it appears to be advantageous to combine groups 101, 102, and 103 for the duration of the working hours each day from Monday to Friday. Fig. 2 illustrates such a combined group 202.

The change in grouping between figs. 1 and 2 can be accomplished by collecting a plurality of sensor findings from the devices of the lighting system over a period of time, noting a regularity of the kind described above, and determining a set of new follower relationships for at least some of the devices of the lighting systems. These new follower relationships are time-dependent in the sense that they are in force only every working day from 8 A.M. to 4 P.M., because these were the hours during which the frequent activity was detected in groups 101, 102, and 103 in the collected sensor findings. When these new follower relationships have been assigned to the devices of the lighting system, all luminaires in the combined group 202 light up and remain on as long as at least one of the sensors in this combined group detects a user and transmits the corresponding message.

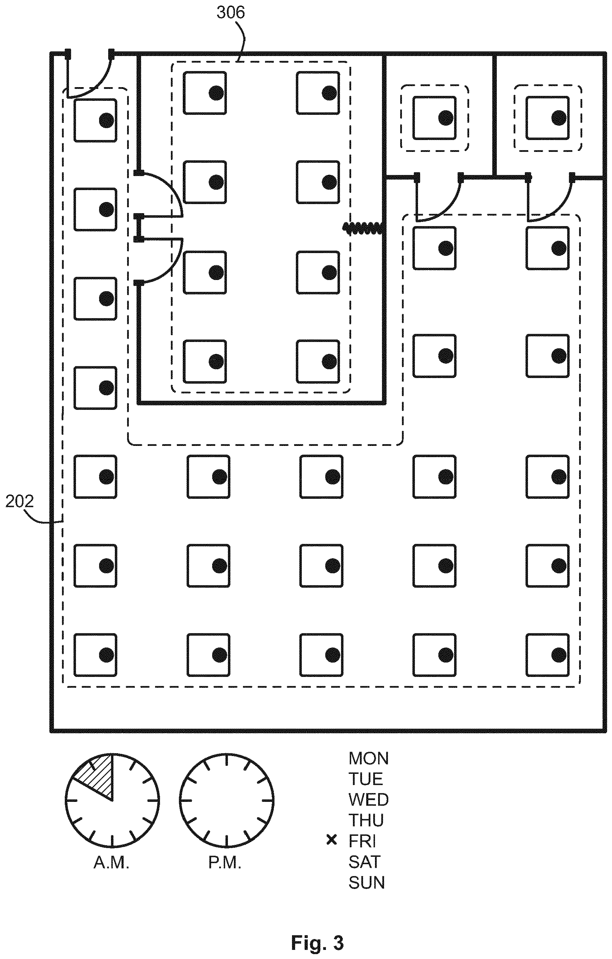

Fig. 3 illustrates another example. Here it is assumed that at least some of the sensors in both meeting room groups 106 and 107 (see fig. 1) detected very frequent movement and/or presence of users, and produced corresponding sensor findings, between 10 and 12 A.M. every Friday morning. Such kind of sensor findings could indicate for example that there is a regular department meeting every Friday between 10 and 12 A.M., for which the foldable partition between the meetings rooms is taken aside. New follower relationships are then determined for and assigned to the devices that originally were in the meeting room groups 106 and 107 on the basis of said sensor findings. These new follower relationships are time-dependent: between 10 and 12 A.M. every Friday morning each luminaire in the combined group 306 is to react upon a message transmitted by any sensor in the combined group 306, by lighting up if it was not on already and by remaining on if it was on already.

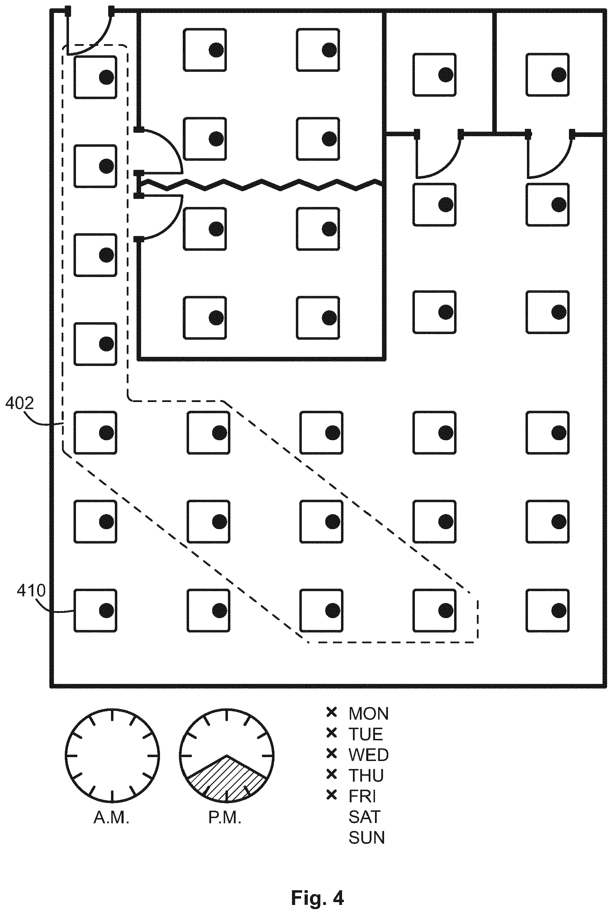

Fig. 4 illustrates another example, emphasizing that the regrouping with new follower relationships does not need to follow the same borderlines between groups as the original grouping. Here the collected sensor findings indicated that a small group of employees have the habit of working late each working day. These employees occupy certain tables in the middle of the open-plan office, and they have the habit of working until 8 P.M. at most. In order not to waste energy by having the whole office illuminated just for them, a group 402 is formed of those luminaires the sensors of which seemed to have regularly detected the late-working users according to the collected sensor findings. The luminaires in the entrance hall are included in the group 402, because the escape route from the space should remain illuminated for safety reasons.

The examples described so far have the common feature that a time scale of the time-dependent, new follower relationships is defined at least in fractions of a day. In such an arrangement a time-dependent follower relationship is a software instruction for one device of the lighting system to react upon a message transmitted by another device of the lighting system in a different way depending on what time of the day it is. This dependency on the time of the day is illustrated with the schematic clock faces in figs. 2, 3, and 4. It is also possible to define the time scale in some other units. An example of this is also seen in figs. 2, 3, and 4, in combination with the fraction-of-a-day approach: each of the illustrated time-dependent follower relationships is valid on particular day(s) of the week only. Other ways of defining the time scale can be found through experimenting.

The period of time during which the sensor findings are collected should be long enough in relation to the planned time scale so that meaningful conclusions can be drawn from the observed regularities in the sensor findings. As an example if the time scale will be defined in fractions of the day, sensor findings should be collected for at least a number of days, and preferably at least two or more weeks, in order to be able to assume that the regularly occurring phenomena in this environment have been recorded.

So far a relatively simple way of reacting to a message has been described. The described time-dependent follower relationships are software instructions for a particular luminaire of the lighting system to light up upon receiving a message transmitted by a particular movement detector if said message came in a first time interval, but not to light up upon receiving such a message from said movement detector if said message came in a second, different time interval. More versatile ways of reacting are described in the following.

As a first example we may consider the situation illustrated in fig. 4. If the simple approach described above was in use, the luminaires in the group 402 would remain lit while the rest of the office would be dark (unless some of the users wandered under the detector of a non-grouped luminaire, in which case that luminaire would naturally light up). The users might consider sharp differences in lighting uncomfortable. A solution may be provided in which at least one of the new follower relationships is a software instruction for a particular luminaire of the lighting system to light up to an illumination level upon receiving a message transmitted by a particular movement detector, so that said illumination level depends on the time when the message came.

In such a solution luminaire 410 would belong to group 202 until 4 P.M. (see fig. 2), lighting up to 100% if it received a message transmitted by any movement detector in group 202. After 4 P.M. the luminaire 410 does not belong to group 402, so its new follower relationship could be e.g. a software instruction to light up to 50% upon receiving a message transmitted by any of the movement detectors in group 402.

The levels to light up to may even differ within the same group of luminaires, at least if there exists a mechanism through which the luminaire (or the device giving direct lighting commands to the luminaire) knows the relative distance between the luminaire and the sensor that transmitted the message. This may be possible if the distances between devices are known to the devices in question, or if the messaging protocol defines some kind of an accumulating hop count or other measure from which a receiving device can deduce, how long distance the message has travelled. If the messages are transmitted wirelessly it may also be possible to use a received signal strength indicator or the like to deduce, from what distance the message was transmitted.

As a second example we may consider using the time-dependent follower relationships to affect the so-called dim-down delays. The time-dependent follower relationship may be a software instruction for a particular luminaire of the lighting system to dim down after a delay after receiving a message transmitted by a particular movement detector, so that the length of the delay depends on the time when the message came (and possibly on other factors, like the distance at which the transmitting movement detector is from the receiving luminaire).

During the working day it may be advisable to maintain the dim-down delay relatively long, because employees may find it irritating if lights begin dimming too soon on nearby areas that are currently unoccupied but nevertheless in the active field of view of many. For the evening and the night it may be advantageous to have a shorter dim-down delay, if it is probably only the night-time security guard who will come around and stay for a couple of minutes at most, or if some employee just comes by to pick up something that he or she forgot earlier during the day. The lights can then be dimmed down in order not to waste energy.

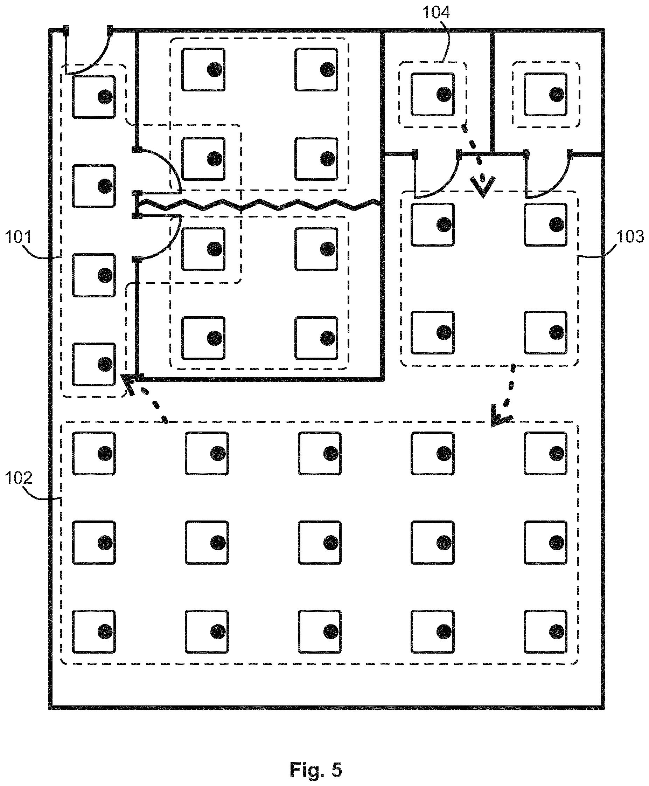

Fig. 5 illustrates an embodiment in which the time-dependent follower relationships define a direction-dependent grouping. Above it was already pointed out how the most active hours in an office may call for maintaining most of the space illuminated, while during less active hours it is advisable to consider, whether some of the lights could be kept off or at least at a lower level in order to save energy. In the embodiment of fig. 5 the luminaires in the coffee room group 103 have been assigned follower relationships instructing them to react upon messages transmitted by the movement detector in the toilet group 104 (in addition to messages transmitted by the movement detectors of their own group 103). However, the luminaire in the toilet group 104 has not been assigned any follower relationship that would instruct it to react upon messages transmitted by the movement detectors in the coffee room group 103. Similarly the luminaires in the open-plan office group 102 have been assigned follower relationships instructing them to react upon messages transmitted by any movement detector in the coffee room group 103 (in addition to messages transmitted by the movement detectors of their own group 102). However, the luminaires in the coffee room group 103 have not been assigned any follower relationships that would instruct them to react upon messages transmitted by the movement detectors in the open-plan office group 102.

The idea here is that at least during less active hours there may be so few persons in the open-plan office that they pay visits to the coffee room relatively seldom. On the other hand a person moving in the coffee room is likely to return to the open-plan office soon. In other words, it is advantageous to have lights on also in a space where the detected user will most probably go next. It is naturally not excluded to apply some similar predictive arrangement also during active hours, but it is assumed that most advantage can be gained this way when the density of users in the space is not at or close to its maximum.

Another embodiment illustrated in fig. 5 is that of at least some of the luminaires belonging to two or more groups simultaneously. The collected sensor findings may show for example that it is actually relatively hard to correctly predict, at least like something between 9 A.M. and 3 P.M. on working days, whether a user detected in the entrance hall will move into any of the meeting rooms or not. As a courtesy measure towards a user who is actually going to a meeting room it would be nice to have the lights there go on already in preparation, but on the other hand switching lights on for no reason is a waste of energy.

As a solution, the embodiment of fig. 5 suggests that the luminaire closest to the door in each meeting room should actually belong to the entrance hall group 101 in addition to its own, meeting-room-specific group between 9 A.M. and 3 P.M. These doorway luminaires of the meeting rooms have been assigned follower relationships telling them to react upon messages transmitted by any of the movement sensors in the entrance hall group, for example by dimming up to 80% so that a nice and convenient welcoming light appears in the doorway of each meeting room.

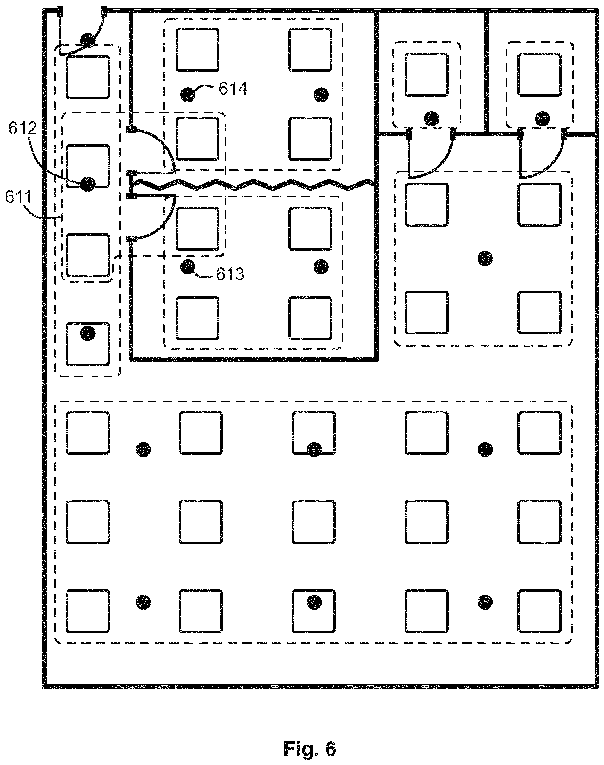

The embodiments described above have involved a movement detector or other sensor in combination with every luminaire. Fig. 6 illustrates an alternative embodiment, in which so-called area sensors are used. In such an embodiment the original, first follower relationships are assigned to the luminaires based on some knowledge about the locations of the sensors on one hand the luminaires on the other hand. These, as well as the second, time-dependent follower relationships group a number of luminaires of the lighting system into a follower group of a particular movement detector. For each luminaire of such a follower group a corresponding follower relationship is a software instruction to react upon a message indicating that said particular movement detector detected movement.

In a lighting system with area sensors the dependence on time can be built into the new follower relationships in any of the ways that have been described above. An example is the completely new group 611 in fig. 6, which has been formed on the basis of finding a strong correlation during certain periods of time between typical sensor findings made by sensors 612, 613, and 614.

Although there appears to be a high degree of regularity in the way in which the illuminated spaces like offices or the like are used, changes do occur over time. Therefore it is advisable to repeat the steps of collecting sensor findings, determining new time-dependent follower relationships, and assigning the new time-dependent follower relationships to the devices every now and then. This leads to assigning updated new time-dependent follower relationships to the devices, each time based at least partly upon the most recently collected sensor findings. The process may be even continuous, so that the step of determining new follower relationships for the plurality of devices is always based on sensor findings collected during a sliding time window of some predetermined length from the present moment backwards.

The examples above have concentrated upon explaining how the follower relationships may involve lights going on or off or dimming up or down. However, it should be noted that follower relationships assigned to luminaires may involve instructions for other kinds of action, and the lighting system may comprise other devices than luminaires or lights. The analysis of collected sensor findings may lead to the possibility of giving time-dependent instructions also to such other devices.

As an example, it may be noted that a particular sensor seems to detect very little presence, movement, or other sensed effect for large portions of the day. The described method may comprise identifying, from the collected sensor findings, at least one sensor of the lighting system that in view of the collected sensor findings appears to detect little movement relative to other sensors of said lighting system during a regularly occurring part of the time. Then the method may comprise instructing the identified sensor to go into a power saving mode for future occurrences of such regularly occurring parts of the time. This may not be that significant if the sensors are e.g. passive infrared sensors that are known to consume relatively little energy even during active operation, but there are other sensor types like active imaging sensors with which the achieved savings in power consumption may be significant.

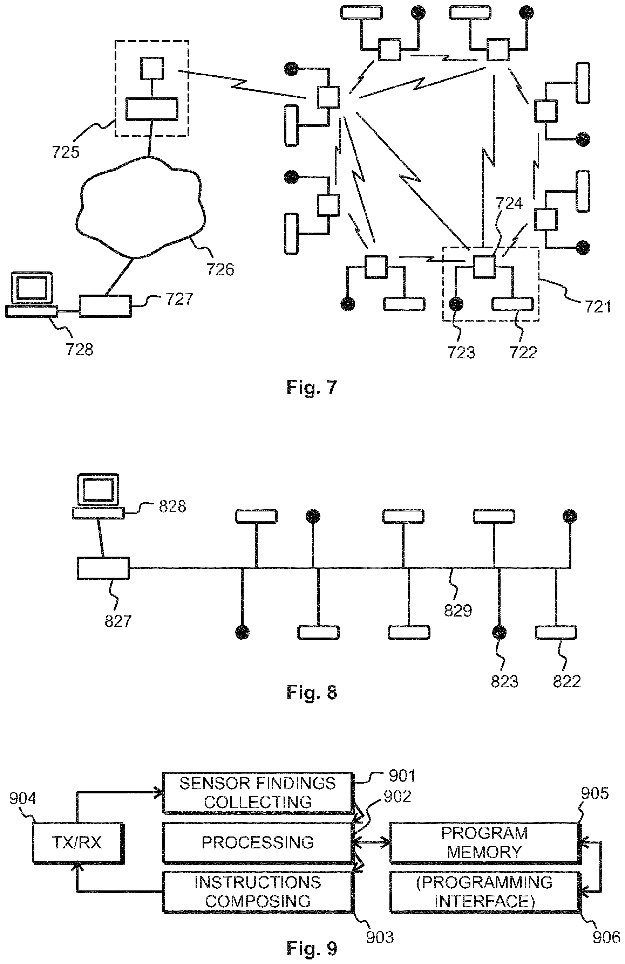

Figs. 7 and 8 illustrate some examples of how communications may be arranged within the lighting system and between the lighting system and a possible external control apparatus. In fig. 7 the lighting system comprises sensor-equipped luminaire units. Luminaire unit 721 is shown as an example. It comprises the actual luminaire part 722, a sensor part 723, and a control unit 724 that is also responsible for communications with other devices. The control units of the luminaire units are equipped with wireless transceivers in order to make them communicate with each other. As an example, the control units may constitute a BLE (Bluetooth Low Energy) mesh network, a ZigBee network, a WiFi network, or some other wireless communications network with relatively short distances between the communicating stations. From at least one of the control units there is an external wireless connection to a gateway unit 725, which constitutes a communications gateway to an external network 726 and further to an external control apparatus 727, which may involve a user interface part 728.

In fig. 8 the lighting system comprises luminaires 822 and sensors 823, all coupled to a wired control bus 829 that can be for example a DALI (Digital Addressable Lighting Interface) bus, a KNX bus, a Modbus, or any other suitable control bus on which addressed messages can be received and transmitted. A control apparatus 827 is also coupled to the control bus 829 so that it can exchange messages with the sensors 823 and the luminaires 822. The control apparatus 827 may have a built-in user interface part 828 or it may have a connector or wireless transceiver through which a user interface part can be connected when needed.

The features shown in figs. 7 and 8 are examples and not all necessary, and they do not exclude the use of other kinds of communications and distribution of tasks between the devices. In a lighting system of the kind shown in fig. 7 one of the control units 724 can take the role of a control apparatus, if it has sufficient processing power. Functions of the control apparatus could additionally or alternatively be located in the gateway unit 725. In a lighting system of the kind shown in fig. 8 the device shown as the control apparatus 827 could actually operate just as a gateway unit, so that the actual control apparatus could be somewhere else, for example at some other node of an external communications network like in fig. 7. There is no need to have any user interface of the kind shown as 728 or 828 in any of the devices, if the devices are equipped for suitably independent operation. It is also possible to only couple in a device with a user interface if some diagnostic and/or maintenance operations need to be performed in the lighting system.

Figs. 7 and 8 also illustrate how the controlling functions of the lighting system may be organized in various ways between the devices. For example in a bus-controlled lighting system like that in fig. 8 it is not necessary to give the sensors and luminaires any more intelligence than what is needed to obey direct commands from the control apparatus 827. In such an arrangement the act of assigning a follower relationship to a luminaire does not necessarily involve transmitting anything to the luminaire itself. The control apparatus 827 may simply store the follower relationship in its own memory; the fact that it concerns a particular luminaire is enough to say that it is "assigned" to that luminaire. Then when the control apparatus 827 receives a sensor finding on the bus 829 from one of the sensors 823, it just checks its own memory to see, what kind of reaction it should command the appropriate luminaire(s) to perform.

In a lighting system like that in fig. 7 it may be advisable to store the follower relationships in the luminaire units 721 themselves, because - especially if the mesh network between luminaire units is spread out on a large area - routing a sensor finding to some centrally located control apparatus and routing the appropriate lighting commands back to the luminaires may take some time. However, also in this kinds of arrangements it is possible to have the actual follower relationships stored in only one device and use them to send direct commands to other devices when needed.

Irrespective of where in the system the control apparatus is located and how its operation is organized, it may have the general functional configuration shown in fig. 9. The control apparatus of fig. 9 is equipped for controlling the operation of a plurality of devices of a lighting system. It comprises a sensor findings collecting subsystem 901 that is configured to collect a plurality of sensor findings from said devices of said lighting system over a period of time. As already mentioned above, a sensor finding is a piece of information indicative of a user having been detected by a particular sensor at a particular moment of time. The sensor findings collection subsystem 901 may store the sensor findings it receives, for example in the form of a database in which the stored sensor findings can be accessed through various kinds of structured queries.

The control apparatus comprises a processing subsystem 902 that is configured to determine follower relationships for the plurality of devices on the basis of sensor findings collected by the sensor findings collecting subsystem 901. As already mentioned above, a follower relationship is a software instruction for one device of the lighting system to react upon a message transmitted by another device of said lighting system. The processing subsystem 902 is configured to make at least some of the determined follower relationships time-dependent in the sense that they define different ways of reacting depending on time.

The control apparatus comprises an instructions composing subsystem 903 that is configured to formulate the follower relationships determined by the processing subsystem 902 into instruction messages for the devices of the lighting system. The control apparatus comprises also a communications subsystem 904 that is configured to convey received sensor finding messages as sensor findings into the sensor findings collecting subsystem 901, and to transmit the instruction messages coming from the instructions composing subsystem towards the devices of the lighting system.

The control apparatus may comprise a program memory 905 for storing the machine-readable software instructions that the processing subsystem 902 executes in order to determine new follower relationships on the basis of the collected sensor findings. The control apparatus may also comprise a programming interface 906 for providing external access to said program memory 905. This way a programmer may examine the past operation of the system and/or upload new machine-readable instructions for execution by the processing subsystem 902.

The step of determining second follower relationships for the plurality of devices on the basis of the plurality of collected sensor findings is preferably performed through unsupervised machine learning. In such a case the operation of the processing subsystem 902 involves unsupervised machine learning algorithms, which may be based on neural networks for example. They compare observed patterns in the sensor findings collected from different sensors and identify those sensors that exhibit temporally similar behaviour patterns. For example, in a corridor sensors see motion one after another when person walks down the corridor. This way the dynamical grouping (i.e. the determining of new, time-dependent follower relationships) can be done without prior knowledge on the location of the sensors and completely automatically. No human involvement is necessarily needed in the setting up of groups - apart from the detection of human users being the source of sensor signals.

Fig. 9 can also be read as an illustration of a computer program product. Such a computer program product is meant for execution by a control apparatus that is controlling the operation of a plurality of devices of a lighting system. The computer program product comprises one or more sets of one or more machine-readable instructions configured to make, when executed on one or more processors of the control apparatus, the control apparatus perform certain steps. These include collecting a plurality of sensor findings from said devices of said lighting system over a period of time, as illustrated by block 901. The steps include also determining follower relationships for said plurality of devices on the basis of said plurality of sensor findings, as illustrated by block 902. At least some of said follower relationships are time-dependent, as has been described above. The steps include also formulating said follower relationships into instruction messages for said devices of said lighting system as illustrated by block 903, and transmitting said instruction messages towards said devices of said lighting system as illustrated by block 904.

An office environment has been described above as a typical place where the invention could be applied. However, this is not a limiting detail: the invention can be applied in a large variety of spaces with different character and requirements: for example schools, hospitals, museums, storage facilities, or anywhere where lighting systems of any substantial size are installed.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for controlling the operation of a plurality of devices of a lighting system, comprising:
- assigning first follower relationships to said plurality of devices, wherein a follower relationship is a software instruction for one device of said lighting system to react upon a message transmitted by another device of said lighting system,
- collecting a plurality of sensor findings from said devices of said lighting system over a period of time, wherein a sensor finding is a piece of information indicative of a user having been detected by a particular sensor at a particular moment of time,
- determining second follower relationships for said plurality of devices on the basis of said plurality of sensor findings, wherein at least some of said second follower relationships are time-dependent, and
- assigning said second follower relationships to said plurality of devices.

2. A method according to claim 1, wherein a time scale of said time-dependent second follower relationships is defined in fractions of a day, so that a time-dependent second follower relationship is a software instruction for one device of said lighting system to react upon a message transmitted by another device of said lighting system in a different way depending on what time of the day it is.

3. A method according to any of claims 1 or 2, wherein at least one of said second follower relationships is a software instruction for a particular luminaire of said lighting system to light up upon receiving a message transmitted by a particular movement detector indicating that said movement detector detected movement if said message came in a first time interval, but not to light up upon receiving such a message from said movement detector if said message came in a second, different time interval.

4. A method according to any of the preceding claims, wherein at least one of said second follower relationships is a software instruction for a particular luminaire of said lighting system to light up to an illumination level upon receiving a message transmitted by a particular movement detector indicating that said movement detector detected movement, said illumination level depending on the time when said message came.

5. A method according to any of the preceding claims, wherein at least one of said second follower relationships is a software instruction for a particular luminaire of said lighting system to dim down after a delay after receiving a message transmitted by a particular movement detector indicating that said movement detector detected movement, the length of said delay depending on the time when said message came.

6. A method according to any of the preceding claims, wherein at least some of said second follower relationships group a number of luminaires of said lighting system into a follower group of a particular movement detector, so that for each luminaire of said follower group a corresponding second follower relationship is a software instruction to react upon a message indicating that said particular movement detector detected movement.

7. A method according to any of the preceding claims, wherein said steps of
- collecting sensor findings,
- determining second follower relationships, and
- assigning the determined second follower relationships to said plurality of devices
are repeated to assign updated second follower relationships to said plurality of devices, each time based at least partly upon the most recently collected sensor findings.

8. A method according to any of the preceding claims, comprising:
- identifying, from said collected sensor findings, at least one sensor of said lighting system that in view of said collected sensor findings appears to detect little movement relative to other sensors of said lighting system during a regularly occurring part of the time, and
- instructing the identified sensor to go into a power saving mode for future occurrences of such regularly occurring parts of the time.

9. A method according to any of the preceding claims, wherein said step of determining second follower relationships for said plurality of devices on the basis of said plurality of sensor findings is performed through unsupervised machine learning.

10. A control apparatus for controlling the operation of a plurality of devices of a lighting system, the control apparatus comprising:
- a sensor findings collecting subsystem configured to collect a plurality of sensor findings from said devices of said lighting system over a period of time, wherein a sensor finding is a piece of information indicative of a user having been detected by a particular sensor at a particular moment of time,
- a processing subsystem configured to determine follower relationships for said plurality of devices on the basis of said plurality of sensor findings, wherein a follower relationship is a software instruction for one device of said lighting system to react upon a message transmitted by another device of said lighting system, and wherein at least some of said follower relationships are time-dependent,
- an instructions composing subsystem configured to formulate said follower relationships into instruction messages for said devices of said lighting system, and
- a communications subsystem configured to convey received sensor finding messages as sensor findings into said sensor findings collecting subsystem and configured to transmit said instruction messages towards said devices of said lighting system.

11. A control apparatus according to claim 10, comprising:
- a rules database for storing a plurality of rules of how received sensor findings are to affect the determining of follower relationships, and
- a programming interface for providing external access to said plurality of rules stored in said rules database.

12. A computer program product for execution by a control apparatus controlling the operation of a plurality of devices of a lighting system, the computer program product comprising one or more sets of one or more machine-readable instructions configured to make, when executed on one or more processors of the control apparatus, the control apparatus perform the steps of:
- collecting a plurality of sensor findings from said devices of said lighting system over a period of time, wherein a sensor finding is a piece of information indicative of a user having been detected by a particular sensor at a particular moment of time,
- determining follower relationships for said plurality of devices on the basis of said plurality of sensor findings, wherein a follower relationship is a software instruction for one device of said lighting system to react upon a message transmitted by another device of said lighting system, and wherein at least some of said follower relationships are time-dependent,
- formulating said follower relationships into instruction messages for said devices of said lighting system, and
- transmitting said instruction messages towards said devices of said lighting system.
